# EUROPEAN PATENT SPECIFICATION

(11) **EP 1 517 573 B1**
(45) Date of publication and mention of the grant of the patent: **14.03.2007**
(21) Application number: 03020957.1
(22) Date of filing: 16.09.2003
(51) Int. Cl.: H04Q 7/38

(54) **Apparatus, and associated method for determination of mobile roaming relationships**
Vorrichtung und entsprechendes Verfahren zum Feststellen von Beziehungen für mobiles Roaming
Dispositif et procédé correspondant pour detérminer des relations d'itinérance mobile

(43) Date of publication of application: 23.03.2005
(73) Proprietor: Research In Motion Limited, Waterloo, Ontario N2L 3W8 (CA)
(72) Inventor: Lankford, Gerald Winton, Waterloo, Ontario N2V 2C4 (KN)
(74) Representative: Jones Day

(56) References cited:
- DE-A- 19 805 261
- US-A1- 2002 187 780
- US-A1- 2003 134 637
- US-B1- 6 556 820

## Description

The present invention relates generally to a manner by which to obtain roaming network information used to form a roaming network list in a multi-network mobile communication system. More particularly, the present invention relates to apparatus, and an associated method, by which to automatically and dynamically create the roaming network list. The roaming network list identifies networks with which mobile nodes, associated with particular home-networks, are operable.

### BACKGROUND

Availability of a communication system through which to communicate data is necessary in modem society. Many aspects of both business and leisure activities require the communication of data pursuant to the effectuation of a communication service. Data that is communicated during the effectuation of a communication service is originated at a communication source and delivered to a communication destination.

A communication system includes, at a minimum, a set of communication stations. The set includes at least a first communication station to which data that is sourced at the communication source is provided. The first communication station forms a sending station that operates to send data therefrom. The set of communication stations includes at least a second communication station that forms a receiving station. The second communication station is coupled to, or forms, the communication destination. The data sent by the first communication station is communicated upon a communication channel to the second communication station, thereby to effectuate the communication of the data, and the communication service, therebetween.

Communication services include both one-way communication services and two-way communication services. One-way communication services are monodirectional. That is to say, data flows in a single direction, from the sending station to the receiving station. Two-way communication services are possible when communication stations of a set of communication stations are capable of both sending and receiving data. That is to say, communication stations capable of transmitting and receiving data permit the effectuation of two-way communication services.

As technological advancements permit, new types of communication systems have been developed and implemented. Technological advancements, when implemented in a communication system, generally permit the data throughput rate at which data is communicated to be increased, at increased levels of accuracy, and over greater distances. Communication performance is measured in terms of a performance criteria, such as baud rate, bit error rate (BER), etc.

A radio communication system is an exemplary type of communication system. In a radio communication system, communication channels upon which data is communicated between communication stations are defined upon radio links extending between the communication stations. Wireline connections, conventionally required to interconnect the communication stations, and upon which to define communication channels in a conventional, wireline communication system, are obviated. Because a wireline connection is not required, radio communication systems provide various advantages over their wireline counterparts. Mobility of communications is a significant advantage that can be provided by a radio communication system.

Technological advancements that are incorporated into new and existing types of communication systems include both advancements in communication technologies and advancements in processing technologies. That is to say, advancements in processing technologies, as well as advancements in communication technologies, are incorporated into new, and existing, communication systems. Technological advancements pertaining to data processing generally provide for increased amounts of data to be processed at quicker rates. And, modern data processing techniques permit large amounts of data to be stored and to be processed. Radio communication systems, e.g., are regularly used to transport data that is subsequently processed through the use of data processing techniques. Communication devices, and systems in which the communication devices are used, are available by which to perform various data processing operations and communication services. Additional communication services, and associated applications that implement new data processing and communication technologies, shall likely continue to be developed and implemented in the future.

A cellular communication system is a type of radio communication system that provides for voice and for data communication services. A cellular communication system is a multi-user system, permitting multiple access by significant numbers of users. Cellular communication systems are popularly utilized and have achieved high penetration levels in many parts of the world. Network infrastructures of such cellular communication systems have been employed to encompass significant portions of the populated areas of the world. Successive generations of cellular communication systems have been deployed, sometimes overlayed upon common geographical areas. Different networks are operated by different network operators.

Access to a cellular communication system is generally provided pursuant to a service subscription thereto. A user utilizes a mobile station, also known as a mobile node, by which to communicate with the network infrastructure of the cellular communication system. The mobile node is associated with a particular network, referred to as the home network of the mobile node. Due to the inherent mobility of the mobile node, the mobile node might travel, i.e., roam, beyond the area encompassed by the home network of the mobile node. To permit continued operation of the mobile node, the mobile node must be capable of communicating with the network infrastructure of the network into whose area the mobile node roams.

So-called roaming agreements are agreements into which operators of different networks, or groups of networks, enter. Pursuant to a roaming agreement, a mobile node, positioned in an area encompassed by a network other than the home network of the mobile node, the mobile node is permitted access to communicate by way of the network infrastructure of the area into which the mobile node has roamed. Authentication, attachment, data routing, and billing procedures, amongst others, are provided pursuant to the roaming agreement.

Roaming agreements tend, however, not always to be static. That is to say, roaming agreements between operators are sometimes terminated and new agreements into between other network operators. And, when a mobile node roams into a geographical area on separate occasions, the mobile node might well be capable of accessing the network infrastructure operated by a first operator on one occasion and to access network infrastructure operated by another operator during another occasion due to termination of one roaming agreement and creation of another roaming agreement.

A network operator sometimes publishes lists that identify other operators with whom the network operator has roaming agreements. The tables are published, for instance, on a website supported by the network operator. A user of a mobile node accesses the website to view the roaming list or table posted thereon. However, because the network operator might well enter into new agreements and terminate old agreements, the roaming table might not accurately identify the existing roaming arrangements at the time when the user of the mobile node accesses the published list or table. The user is then at risk of inappropriately relying upon the availability of communications, using the mobile node, during subsequent travel into a roaming area. Or, the user, alternately, is at risk making alternate communication arrangements and utilizing the mobile node, even though the mobile node is permitted roaming operation into a roaming area into which the user subsequently travels. United States Patent Application, number US2002/0187780, e.g., discloses use of a roaming table..

A manner by which better to identify, accurately and timely, the roaming agreements with a network operator is therefore needed.

It is in light of this background information related to roaming of a mobile node in a communication system that the significant improvements of the present invention have evolved.

### SUMMARY OF THE INVENTION

In accordance with an aspect of the invention, an improvement of apparatus for facilitating communication of a mobile node when roaming beyond a home-network portion of a network part of a communication system associated therewith is provided in a radio communication system having a plurality of mobile nodes operable to communicate with the network part, the network part having a first network portion and at least a second network portion, the first network portion operated by a first network operator and the at least the second network portion operated by at least a second network operator, a selected one of the first network portion and the at least the second network portion forming the home-network portion associated with a mobile node. The apparatus comprises a detector adapted to receive positional information associated with the mobile nodes, the positional information communicated by the mobile nodes to the network part at selected times when the mobile nodes communicate with the network part, said detector for detecting values of the positional information and for forming indications of the values of the positional information, the positional information identifying positioning of the mobile nodes in terms of with which of the first and at least the second networks that the mobile nodes communicate and, thereby a relationship thereof with the mobile nodes, an associator coupled to said detector to receive the indications formed by said detector of the values of the positional information, said associator for associating positioning of the mobile nodes together with one of the first and at least second network portions, respectively, to which the positional information is communicated, thereby to indicate, if the one of the network portions, with which the positioning information indicates the mobile nodes to be associated, is other than the home-network portion, and a storage element coupled to said associator, said storage element for storing values representative of associations formed by said associator, the values together forming a roaming network table indicating with which of the network portions the mobile nodes are capable of communicating, the roaming network table forming the listing, the listing accessible by the users of the plurality of mobile nodes, thereby to be provided with the listing of the network portions.

According to another aspect of the invention, a method for communication of a mobile node when roaming beyond a home-network portion of a communication system associated therewith is provided in a radio communication system having a plurality of mobile nodes operable to communicate with a network part, the network part having a first network portion and at least a second network portion, the first network portion operated by a first network operator and the at least the second network portion operated by at least a second network operator, a selected one of the first network portion and the at least the second network portion forming the home-network portion associated with the mobile nodes. The comprises detecting values of positional information, the positional information associated with the plurality of mobile nodes and communicated by the mobile nodes to the network part at selected times when the mobile nodes communicate with the network part, associating positioning of the mobile nodes together with one of the first and at least second network portions, respectively, to which the positional information is communicated, thereby to indicate, if the one of the network portions with which the positioning information indicates the mobile nodes to be associated, is other than the home network portion, and forming a roaming network table indicating with which of the network portions that the mobile nodes are capable of communicating responsive to associations formed during said operation of associating, accessing by the users of the plurality of mobile nodes, the roaming network table, the roaming network table forming the listing, thereby to provide said users with the listing of the network portions.

A more complete appreciation of aspects of the present invention and the scope thereof can be obtained from the accompanying drawings that are briefly summarized below, the following descriptions of the presently-preferred embodiments of the invention, and the appended claims.

### BRIEF DESCRIPTION OF THE DRAWINGS

Figure 1 illustrates a functional block diagram of a radio communication system in which an embodiment of the present invention is operable.
Figure 2 illustrates a message sequence diagram representative of signaling generated during operation of an embodiment of the present invention that forms part of the communication system shown in Figure 1.
Figure 3 illustrates an exemplary roaming network table constructed pursuant to operation of an embodiment of the present invention.
Figure 4 illustrates a method flow diagram listing the method steps of a method of operation of an embodiment of the present invention.

### DETAILED DESCRIPTION

Apparatus and an associated method by which to obtain roaming network information that identifies networks permitting roaming of a mobile node, associated with a particular home network, are provided.

Through operation of an embodiment of the present invention, a manner is provided by which automatically and dynamically to create a roaming network list.
The list identifies networks with which mobile nodes, associated with particular home networks, are operable.

In one aspect of the present invention, the list is created by detecting with which network a roaming mobile node is permitted to communicate. Communication of a plurality of mobile nodes, and their respective connections, are monitored and information derived there from, is used to create the list. Up-to-date roaming information is maintained in the roaming network list. The information is time-dated, and is removed, or relied upon less, as the information ages. The list is formed at a service center and is available for subsequent review. Subsequent access to the roaming network list provides an accurate indication of with which network, and in which area corresponding thereto, that the mobile node is capable of communicating when the mobile node travels beyond its home network.

The mobile node is identified by an identifier. And, the identifier is communicated during its operation to communicate with a network part of a cellular, or other radio, communication system. The identifier is communicated by the mobile node to the network part. And, the identifier is used, together with positional information in the formation of the roaming network list. The identifier that identifies the mobile node indicates, for instance, the network that is the home network associated with the mobile node. And, positioning of the mobile node is identified, at least in terms of the network with which the mobile node communicates. The identifier of the mobile node that identifies the home network of the mobile node together with the positional information indicates a relationship between the mobile node and the network with which the mobile node is communicating. This relationship indicates that a roaming agreement is in existence between the home network associated with the mobile node and the network with which the mobile node is communicating. Entry of such an indication into a roaming network list indicates such a relationship.

The identifier communicated by the mobile node forms, for instance, an IMSI (International Mobile Subscriber Identity) number that includes a mobile network code (MNC) and a mobile country code (MCC). An associator associates the positional information together with the identifier that identifies the mobile node, thereby to identify the network with which the mobile node of a particular home network is capable of operation when roaming therein. And, indicia associated with the association is used to populate a roaming network list. The roaming network list is formed at a storage element embodied at, for instance, at a service center.

The roaming network list also includes a time-stamp that identifies the time at which the association is made such as by identifying the time at which the roaming network list entry is formed.

The identifier is communicated to the network pursuant to registration procedures by which the mobile node registers itself with the network. Registration procedures are performed, amongst other times, when a mobile node is initially powered-on, when the mobile node enters a new network, or portion of a network, and at selected intervals during its operation. And, in a further embodiment, message header portions of data packets or frames that are communicated by a mobile node each include the identifier. Thereby, the identifier that identifies the mobile node is provided to the network with which the mobile node communicates at frequent intervals.

Entries in the roaming network list are selectably deleted when the entry ages beyond a selected age. That is to say, when the time-stamp associated with an entry is aged beyond a selected age, the entry is removed, or otherwise given less reliance as to the present state of the roaming capabilities identified by the entry. Subsequent access to the roaming network list accurately and timely identifies the roaming arrangements that are permitted of a mobile node associated with a particular home network, with other networks.

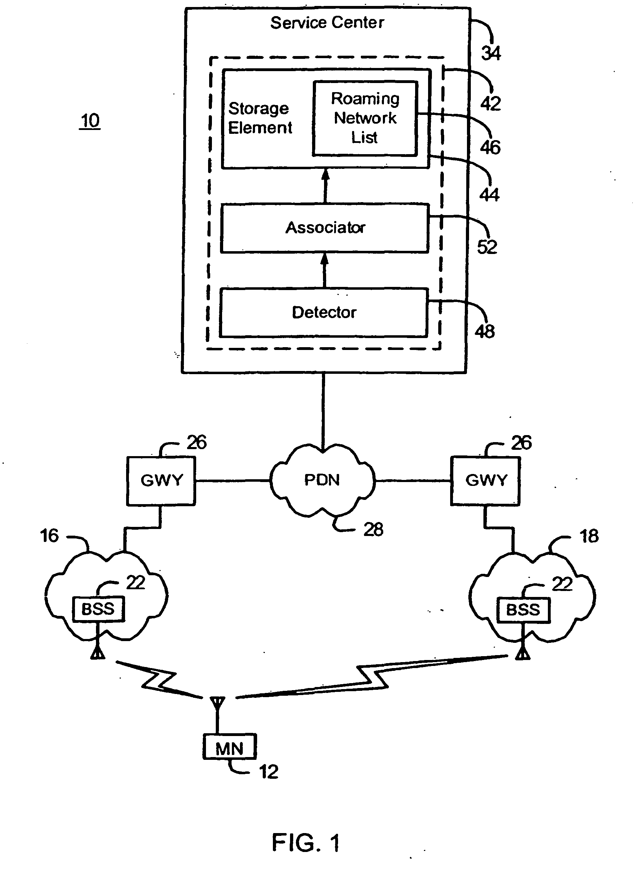

Referring now to Figure 1, a radio communication system, shown generally at 10, provides for radio communications between a radio network and mobile nodes, of which the mobile node (MN) 12 is representative. The communication system is a multi-user communication system, and a plurality of concurrent communication sessions are concurrently effectuable between the radio network and a plurality of mobile nodes. During the communication session, communication services are effectuated. While only the single, representative mobile node 12 is shown in the Figure, additional mobile nodes can analogously be represented in the Figure.

In the exemplary implementation, the radio communication system forms a cellular communication system that operates, generally, pursuant to the operating protocols set forth in the operating specification of the GSM (Global System for Mobile communications) cellular communication system promulgated by the ETSI. The system further provides for GPRS (General Packet Radio Service) that is also effectuated pursuant to an operating specification related thereto, and promulgated by the ETSI. While the following description of exemplary operation of the communication system 10 shall be described with respect to its exemplary implementation as a GSM/GPRS system, the teaching of the present invention are analogously also implementable in other types of cellular, and other radio, communication systems. Operation of an embodiment of the present invention can analogously also be described with respect to its implementation in other types of communication systems.

Communications between the mobile node and the network part of the communication system are effectuated upon radio channels defined by a radio air interface extending therebetween. Various channels are defined upon radio links formed between the network part and the mobile, including, for instance, channels used for communication of control data and traffic data.

The network part of the communication network includes a plurality of different networks, each operated by a network operator. Here, two networks, networks 16 and 18 are shown in the Figure. The network 16 here forms the home network of the mobile node 12, and the network 18 forms a network encompassing a geographic area to which the mobile node is capable of roaming. And, here, the networks 16 and 18 are operated by different network operators.

Both the network 16 and the network 18 form GSM/GPRS-compliant networks. And, each of the networks 16 and 18 includes the functional entities that are defined in the ETSI-promulgated, operational specification pertaining to GSM/GPRS. Accordingly, the network 16 includes a base station system (BSS) 22. The base station system includes both a radio transceiver and also control entities that control operation of the radio transceiver. A single base station system 22 is shown in the Figure. In a typical system, each base station system typically includes a plurality of base transceiver stations, and the network also includes a plurality of base station systems. Each base station transceiver, formed of a radio transceiver, defines a portion, referred to as a cell, of a geographical area encompassed by the network. When a mobile node is positioned within a cell defined by one of the radio transceivers, the mobile node generally communicates with the associated radio transceiver.

A base station system, commonly referenced at 22, is also embodied at the second network 18. Base transceiver stations of the base station system of the second network also define cells.

The network 16 is coupled, by way of a gateway (GWY) 26 to a packet data network (PDN) 28. The packet data network is representative of, e.g., the internet backbone. And, the second network 18 is also coupled to the packet data network 28 by way of a gateway 26.

A service center 34 is coupled to the packet data network 28 and is here representative of a service center that is associated with the communication of data pursuant to effectuation of a GPRS communication.

As noted previously, due to the inherent mobility of the mobile node 12, the mobile node might roam beyond its home network, i.e., here meaning the network controlled by the home operator of the mobile station, into a network operated by another operator. When roaming into the area encompassed by the other network, continued operation of the mobile station requires, amongst other things, that the respective network operators have a roaming agreement permitting continued operation of the mobile station when the mobile station roams into the area encompassed by the network operated by the other network operator. The network 18 is here representative of such other network, and movement of the mobile station 12 out of the area encompassed by the network 16 and into the area encompassed by the network 18 is representative of the network into which the mobile node roams. For planning purposes, a user of the mobile node, knowing that the mobile node shall roam beyond the home network of the mobile node, would like to know whether a roaming agreement between the operator of the home network and the network at which the user and the mobile node exists. Conventional notification schemes include posting on a website, maintained by the operator of the home network associated with the mobile node, of other networks with which the network operator has roaming agreements. However, information posted on such websites is sometimes obsolete and does not, therefore, provide accurate information to the user of the mobile node to be used for planning purposes.

The service center 34 includes apparatus, shown generally at 42, of an embodiment of the present invention that facilitates formation of a roaming network list, accessible by a user of the mobile node to provide a user of the mobile node with an accurate listing of networks with which the mobile node can communicate when roaming beyond the home network of the mobile node.

The apparatus includes a storage element 44 at which the roaming network list 46 is maintained. The apparatus includes a detector 48 that is coupled to receive positional and identifying indicia associated with the mobile node 12.

Detections made by the detector 48 are provided to an associator 52. The associator 52 associates the positioning of the mobile node 12 together with the network through which the mobile node is communicating. For instance, when the mobile node 12 is positioned to communicate with the network 18, the positional information is associated by the associator 52 to identify that the network 18 is a suitable roaming network with which the operator of the home network 16 has an operating agreement. Asssociations made by the associator 52 are provided to the storage element 44. And, values of the associations made by the associator 52 form the entries to the roaming network list 46. Time indicia are also associated with the entries placed in the roaming network list. When the information becomes dated, i.e., is stored at the roaming network list for greater than a selected time period, the entry is deleted, or otherwise given lesser weight than other entries. The associator 52, in one implementation, also operates as a deleter for deleting time-expired entries. Thereby, dynamic selection and dynamic updating of the entries to the roaming network list better ensures that the networks indicated to be suitable for communications with a particular mobile node when roaming beyond the home network of the mobile node. The user of the mobile node planning to travel beyond the home network of the mobile node accesses the roaming network list, accessible, e.g., by way of the internet or through download to the mobile node. Responsive to the indications provided on the roaming network list, a user of another mobile node is able to determine whether roaming capabilities shall be available when the user travels to the area encompassed by the other network.

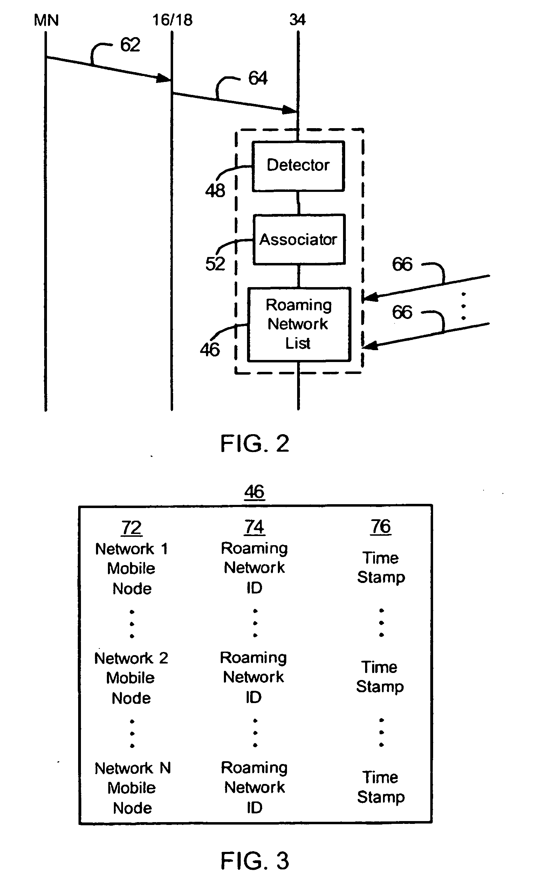

Figure 2 illustrates a message sequence diagram, shown generally at 60, representative of operation of an embodiment of the present invention. Here, the mobile node sends identifying indicia, here indicated by the segment 62, to the network within which the mobile node is positioned and is operable. The identifying indicia is formed of, in the exemplary implementation, the IMSI (International Mobile Subscriber Identity) number associated with the mobile node. The IMSI number includes the MNC (Mobile Network Code) and the MCC (Mobile Country Code) as portions thereof. The identifying indicia is provided pursuant to registration procedures or, in one implementation, as part of message header information of every message that is communicated by the mobile node.

When the network receives the identifying indicia, such information is forwarded, indicated by the segment 64, to the service center 34. Once delivered to the service center, the detector 48 detects its delivery, and indications are provided to the associator 52. And, thereafter, once the associations are made, the roaming network list is populated with values determined by the associations. Subsequently, and as indicated by the segments 66, access is made to the contents of the roaming network list to provide other users with indications of the roaming arrangements between different network operators.

The roaming network list is created based upon indicia provided by a large number of mobile nodes accessing any of various networks to create an exhaustive roaming network list, dynamically created and dynamically altered, thereby to be in updated form, more likely to be accurate than conventional manners by which roaming network lists are created.

Figure 3 illustrates an exemplary network roaming list 46 that is constructed through operation of the apparatus 42. Here, a first column 72 indicates mobile nodes, identified at least in terms of their respective home networks. Indexed thereagainst are roaming network identities 74 at which the mobile nodes associated therewith are operable. And, time stamp information 76 is also contained in each entry of the roaming network list.

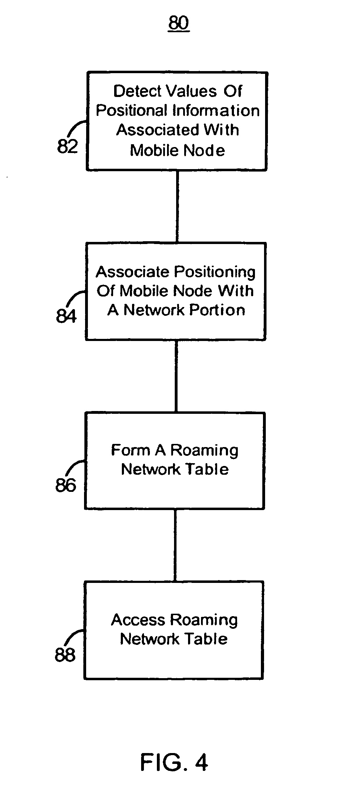

Figure 4 illustrates a method flow diagram, shown generally at 80, representative of operation of an embodiment of the present invention. The method facilitates communication of a mobile node when roaming beyond a home network portion associated therewith.

First, and as indicated by the block 82, values of positional information associated with a mobile node is detected. Then, and as indicated by the block 84, positioning of the mobile node is associated together with one of the network portions of the communication system to which the positional information is communicated, thereby to indicate if one of the network portions with which the positioning information is communicated indicates the mobile node to be associated is other than the home network portion associated with the mobile node.

Then, and as indicated by the block 86, a roaming network table is formed that indicates with which of the network portions that the mobile node is capable of communicating. Thereafter, and as indicated by the block 88, the roaming network table is accessed to provide one accessing the table with an indication of roaming arrangements between the respective networks of the communication system.

Thereby, a dynamically-created roaming network list is formed, and updated, as appropriate. Access to the roaming network list provides an accurate indication to the one accessing the list of the roaming arrangements between different networks of a radio communication system.

The previous descriptions are of preferred examples for implementing the invention, and the scope of the invention should not necessarily be limited by this description. The scope of the present invention is defined by the following claims.

## Claims

1. A network part of a radio communication system (10) having a plurality of mobile nodes (12) operable to communicate with a the network part, the network part having a first network portion (16) and at least a second network portion (18), the first network portion (16) operated by a first-network operator and the at least the second network portion (18) operated by at least a second network operator, a selected one of the first network portion (16) and the at least the second network portion (18) forming a home-network portion associated with a mobile node (12) of the mobile nodes, said network part **characterized by** apparatus (42) for providing a user of a mobile node of the plurality of mobile nodes with a listing of network portions with which the mobile node (12) can communicate when roaming beyond the home-network portion associated therewith, said apparatus (42) comprising:
a (48) detector adapted to receive positional information associated with the plurality of mobile nodes (12), the positional information communicated by the mobile nodes (12) to the network part at selected times when the mobile nodes (12) communicate with the network part, said detector (48) for detecting values of the positional information and for forming indications of the values of the positional information, the positional information identifying positioning of the mobile nodes (12) in terms of with which of the first and at least second network portions that the mobile nodes communicate and, thereby, relationships thereof with the mobile nodes (12);
an associator (52) coupled to said detector (48) to receive the indications formed by said detector (48) of the values of the positional information, said associator (52) for associating positioning of the mobile nodes (12) together with one of the first and at least second network portions (16, 18), respectively, to which the positional information is communicated, thereby to indicate, if the one of the network portions (16, 18), with which the positioning information indicates the mobile nodes (12) to be associated, is other than the home-network portions; and
a storage element (44) coupled to said associator, said storage element (44) for storing values representative of associations formed by said associator (52), the values together forming a roaming network table (46) indicating with which of the network portions the mobile nodes (12) are capable of communicating, the roaming network table forming the listing, the listing accessible by the users, of the plurality of mobile nodes thereby to be provided with the listing of the network portions.

2. The network part of claim 1 wherein the mobile nodes (12) have identifiers associated therewith and wherein said detector (48) is further adapted to receive the identifiers and for detecting values thereof.

3. The network part of claim 2 wherein the radio communication system (10) comprises a cellular radio communication system that provides for GPRS (General Packet Radio Service) and wherein the identifiers associated with the mobile nodes (12) comprises at least a portion of IMSI (International Mobile Subscriber Identity) numbers.

4. The network part of claim 3 wherein the IMSI number includes a Mobile Network Code (MNC) and wherein the at least the portion of the IMSI number of which said detector detects the values comprises the Mobile Network Code, the Mobile Network Code identifying the home network portions associated with the mobile nodes.

5. The network part of claim 3 wherein the IMSI numbers include Mobile Country Codes (MCC) and wherein the at least the portion of the IMSI numbers of which said detector detects the values comprise the Mobile Country Codes.

6. The network part of claim 1 wherein the mobile nodes (12) register with the network part at selected times and wherein the positional information detected by said detector is communicated by the mobile nodes pursuant to registration with the network part.

7. The network part of claim 1 wherein communications of the mobile nodes (12) are formatted into messages, the messages having header parts and wherein the positional information detected by said detector is embodied in the header parts of the messages.

8. The network part of claim 2 wherein said associator further identifies the mobile nodes whose positioning is associated together with the one of the first and at least second network portions.

9. The network part of claim 1 wherein the roaming network table further includes indications of time at which the values representative of the associations are stored at said storage element.

10. The network part of claim 9 further comprising a roaming table entry deleter coupled to said storage element, said roaming table entry deleter selectably operable to delete selected values of the roaming entry table maintained at said storage element.

11. The network part of claim 10 wherein said roaming table entry deleter deletes values of the roaming entry table stored thereat for longer than a selected time period.

12. A method (80) of communicating in a radio communication system having a plurality of mobile nodes operable to communicate with a network part, the network part having a first network portion and at least a second network portion, the first network portion operated by a first-network operator and the at least the second network portion operated by at least a second network operator, a selected one of the first network portion and the at least the second network portion forming a home-network portion associated with each mobile node of the plurality of mobile nodes, comprising the step of providing a user of a mobile node of the plurality of mobile nodes with a listing of network portions with which the mobile node can communicate when roaming beyond the home-network portion associated therewith, said method **characterized by** the steps of:
detecting (82) values of positional information, the positional information associated with the plurality of mobile nodes and communicated by the mobile nodes to the network part at selected times when the mobile nodes communicate with the network part, the positional information identifying positioning of the mobile nodes in terms of with which of the first and at least second network portions that the mobile nodes communicate and thereby, a relationship thereof with the mobile nodes;
associating (84) positioning of the mobile nodes together with one of the first and at least second network portions, respectively, to which the
positional information is communicated, thereby to indicate, if the one of the network portions with which the positioning information indicates the mobile nodes to be associated, is other than the home network portion;
forming (86) a roaming network table indicating with which of the network portions that the mobile nodes are capable of communicating responsive to associations formed during said operation of associating;
accessing, by the users of the plurality of mobile nodes, the roaming network table, the roaming network table forming the listing, thereby to provide said users with the listing of the network portions.

13. The method (80) of claim 12 wherein said operation of detecting further comprises detecting values that identify the mobile nodes.

14. The method (80) of claim 13 wherein the radio communication system comprises a cellular radio communication system that provides for GPRS (General Packet Radio Service) and wherein the values that identify the mobile nodes during said operation of detecting comprise at least a portion of IMSI (International Mobile Subscriber Identity) numbers.

15. The method (80) of claim 14 wherein the at least the portion of the IMSI numbers comprise mobile network codes, the mobile network codes identifying the home network portions associated with the mobile nodes.

16. The method (80) of claim 15 wherein the at least the portion of the IMSI numbers comprise mobile country codes.

17. The method (80) of claim 15 wherein said operation of forming the roaming table further comprises identifying times at which values are entered thereat.

18. The method of claim 17 further comprising the operation of deleting values out of the roaming network table after a selected time.

## Patentansprüche

1. Ein Netzwerk-Teil eines Funk-Kommunikationssystems (10), welches eine Mehrzahl von Mobil-Knoten (12) aufweist, welche fähig sind, mit dem Netzwerk-Teil zu kommunizieren, wobei der Netzwerk-Teil einen ersten Netzwerk-Teilbereich (16) und zumindest einen zweiten Netzwerk-Teilbereich (18) aufweist, wobei der erste Netzwerk-Teilbereich (16) von einem ersten Netzwerk-Betreiber betrieben wird und der zumindest zweite Netzwerk-Teilbereich (18) von zumindest einem zweiten Netzwerk-Betreiber betrieben wird, wobei ein ausgewählter des ersten Netzwerk-Teilbereichs (16) und des zumindest zweiten Netzwerk-Teilbereichs (18) einen Home-Netzwerk-Teilbereich bildet, welche zu einem Mobil-Knoten (12) der Mobil-Knoten zugeordnet ist, wobei der Netzwerk-Teil durch eine Vorrichtung (42) **gekennzeichnet** ist, welche einen Nutzer eines Mobil-Knotens der Mehrzahl von Mobil-Knoten mit einer Auflistung von Netzwerk-Teilbereichen versieht, mit welchen der Mobil-Knoten (12) kommunizieren kann, wenn ein Roaming über den dazu zugeordneten Home-Netzwerk-Teilbereich hinaus erfolgt, wobei die Vorrichtung (42) umfasst:
einen (48) Detektor, der darauf angepasst ist, eine Positionsinformation, welche einer Mehrzahl von Mobil-Knoten (12) zugeordnet ist, zu empfangen, wobei die Positionsinformation seitens der Mobil-Knoten (12) dem Netzwerk-Teil zu ausgewählten Zeiten, wenn die Mobil-Knoten (12) mit den Netzwerk-Teil kommunizieren, mitgeteilt wird, wobei der Detektor (48) zum Detektieren von Werten der Positionsinformation und zum Bilden von Angaben der Werte der Positionsinformation ausgestaltet ist, wobei die Positionsinformation die Positionierung der Mobil-Knoten (12) in Hinblick daraufhin aufzeigt, mit welchem des ersten und des zumindest zweiten Netzwerk-Teilbereiches die Mobil-Knoten kommunizieren, und dabei Beziehungen hiervon mit den Mobil-Knoten (12) aufzeigt;
einen Zuordner (52), welche mit dem Detektor (48) verbunden ist, um die Angaben der Werte der Positionsinformation, welche von dem Detektor (48) gebildet worden sind, zu empfangen, wobei der Zuordner (52) zum Zuordnen der Positionierung der Mobil-Knoten (12) zu einem des ersten und des zumindest zweiten Netzwerk-Teilbereiches (16, 18), an den die Positionsinformation kommuniziert wird, ausgestaltet ist, um dabei anzugeben, ob der eine der Netzwerk-Teilbereiche (16, 18), zu dem die Mobil-Knoten (12) gemäß der Angabe der Positionierungsinformation zuzuordnen sind, anders als die Home-Netzwerk-Teilbereiche ist; und
ein Speicher-Element (44), welches mit dem Zuordner verbunden ist, wobei das Speicher-Element (44) ausgestaltet ist, Werte abzuspeichern, welche für die durch den Zuordner gebildeten Zuordnungen kennzeichnend sind, wobei die Werte zusammen eine Roaming-Netzwerk-Tabelle (46) bilden, welche angibt, mit welchen der Netzwerk-Teilbereiche die Mobil-Knoten (12) kommunizieren können, wobei die Roaming-Netzwerk-Tabelle die Auflistung bildet, auf welche von den Nutzern der Mehrzahl der Mobil-Knoten zugegriffen werden kann, um dabei mit der Auflistung der Netzwerk-Teilbereiche versehen zu werden.

2. Der Netzwerk-Teil nach Anspruch 1, wobei die Mobil-Knoten (12) Identifizierungszeichen aufweisen, welche hiermit verknüpft sind, und wobei der Detektor (48) daraufhin angepasst ist, die Identifizierungszeichen zu empfangen und die Werte derer zu detektieren.

3. Der Netzwerk-Teil nach Anspruch 2, wobei das Funk-Kommunikationssystem (10) ein zellulares Mobilfunk-System umfasst, welches GPRS (General Packet Radio Service) ermöglicht, und wobei die Identifizierungszeichnen, welche mit den Mobil-Knoten (12) verknüpft sind, zumindest einen Teil der IMSI- (International Mobile Subscriber Identity) Nummern umfassen.

4. Der Netzwerk-Teil nach Anspruch 3, wobei die IMSI-Nummern einen Mobile-Network-Code (MNC) beinhalten und wobei der zumindest verwendete Teil der IMSI-Nummer, dessen Werte der Detektor detektiert, den Mobile-Network-Code umfasst, wobei der Mobile-Network-Code die Home-Netzwerk-Teilbereichs, welche dem Mobil-Knoten zugeordnet sind, angeben.

5. Der Netzwerk-Teil nach Anspruch 1, wobei die IMSI-Nummern die Mobile-Country-Codes (MCC) beinhalten und wobei der zumindest verwendete Teil der IMSI-Nummern, deren Werte der Detektor detektiert, die Mobile-Country-Codes umfasst.

6. Der Netzwerk-Teil nach Anspruch 6, wobei sich die Mobil-Knoten (12) bei dem Netzwerk-Teil zu ausgewählten Zeiten melden und wobei die Positionsinformation, welche von dem Detektor detektiert wird, von den Mobil-Knoten gemäß der Meldung bei dem Netzwerk-Teil mitgeteilt wird.

7. Der Netzwerk-Teil nach Anspruch 1, wobei die Mitteilungen der Mobil-Knoten (12) in Nachrichten formatiert werden, wobei die Nachrichten Header-Teile aufweisen und wobei die Positionsinformation, welche von dem Detektor detektiert wird, in den Header-Teilen der Nachrichten enthalten sind.

8. Der Netzwerk-Teil nach Anspruch 2, wobei der Zuordner ferner die Mobil-Knoten bestimmt, deren Positionierung dem einen des ersten oder des zweiten Netzwerk-Teils zugeordnet ist.

9. Der Netzwerk-Teil nach Anspruch 1, wobei die Roaming-Netzwerk-Tabelle darüber hinaus Zeitangaben enthält, zu denen die Werte, welche für die Zuordnungen kennzeichnend sind, in dem Speicher-Element abgespeichert worden sind.

10. Der Netzwerk-Teil nach Anspruch 9, welche ferner einen Roaming-Tabellen-Eintrags-Löscher umfasst, welcher mit dem Speicher-Element verbunden ist, wobei der Roaming-Tabellen-Eintrags-Löscher wahlweise fähig ist, ausgewählte Werte der Roaming-Eintrags-Tabelle zu löschen, welche in dem Speicher-Element aufrecht erhalten werden.

11. Der Netzwerk-Teil nach Anspruch 10, wobei der Roaming-Tabellen-Eintrags-Löscher Werte der Roaming-Eintrags-Tabelle löscht, welche dort länger als eine bestimmte Zeitperiode gespeichert sind.

12. Ein Verfahren (80) zum Kommunizieren in einem Funk-Kommunikationssystem, welches eine Mehrzahl von Mobil-Knoten aufweist, welche fähig sind, mit einem Netzwerk-Teil zu kommunizieren, wobei der Netzwerk-Teil einen ersten Netzwerk-Teilbereich und zumindest einen zweiten Netzwerk-Teilbereich aufweist, wobei der erste Netzwerk-Teilbereich von einem ersten Netzwerk-Betreiber betrieben wird und der zumindest zweite Netzwerk Teilbereich von zumindest einem zweiten Netzwerk-Betreiber betrieben wird, wobei ein ausgewählter des ersten Netzwerk-Teilbereichs und des zumindest zweiten Netzwerk-Teilbereich einen Home-Netzwerk-Teilbereich bildet, welche zu jedem Knoten der Mehrzahl von Mobil-Knoten zugeordnet ist, wobei das Verfahren den Schritt des Versehens eines Nutzers eines Mobil-Knotens der Mehrzahl von Mobil-Knoten mit einer Auflistung von Netzwerk-Teilbereichen, mit denen der Mobil-Knoten kommunizieren kann, wenn ein Roaming über den dazu zugeordneten Home-Netzwerk-Teilbereich hinaus erfolgt, beinhaltet, wobei das Verfahren **gekennzeichnet ist durch** folgende Schritte:
Detektieren (82) von Werten von Positionsinformation, wobei die Positionsinformation zu der Mehrzahl von Mobil-Knoten zugeordnet ist und seitens der Mobil-Knoten dem Netzwerk-Teil zu ausgewählten Zeiten mitgeteilt wird, wenn die Mobil-Knoten mit dem Netzwerk-Teil kommunizieren, wobei die Positionsinformation die Positionierung der Mobil-Knoten daraufhin anzeigt, mit welchem des ersten und des zumindest zweiten Netzwerk-Teilbereiches die Mobil-Knoten kommunizieren, und dabei eine Beziehung davon mit den Mobil-Knoten (12) anzeigt;
Zuordnen (84) der Positionierung der Mobil-Knoten zu einem des ersten und des zumindest zweiten Netzwerk-Teilbereiches, an welche die Positionsinformation mitgeteilt worden ist, um dabei anzugeben, ob der eine der Netzwerk-Teilbereiche, zu dem die Mobil-Knoten gemäß der Angabe der Positionierungsinformation zuzuordnen ist, anders als der Home-Netzwerk-Teilbereich ist;
Bilden (86) eine Roaming-Netzwerk-Tabelle, welche angibt, mit welchen der Netzwerk-Teilbereiche die Mobil-Knoten kommunizieren können, in Reaktion auf die Zuordnungen, die während der Tätigkeit des Zuordnens gebildet worden sind;
Zugreifen seitens der Nutzer der Mehrzahl von Mobil-Knoten auf die Roaming-Netzwerk-Tabelle, wobei die Roaming-Netzwerk-Tabelle die Auflistung bildet, wobei dabei die Nutzer mit der Auflistung der Netzwerk-Teilbereiche versehen werden.

13. Das Verfahren (80) nach Anspruch 12, wobei die Tätigkeit des Detektierens ferner umfasst, dass Werte, die die Mobil-Knoten angeben, detektiert werden.

14. Das Verfahren (80) nach Anspruch 13, wobei das Funk-Kommunikationssystem ein zellulares Mobilfunk-System umfasst, welches GPRS (General Packet Radio Service) ermöglicht, und wobei die Werte, die die Mobil-Knoten während der Tätigkeit des Detektierens angeben, zumindest einen Teil der IMSI- (International Mobile Subscriber Identity) Nummern umfassen.

15. Das Verfahren (80) nach Anspruch 14, wobei der zumindest verwendete Teil der IMSI-Nummern Mobile-Network-Codes umfasst, wobei die Mobile-Network-Codes die Home-Netzwerk-Teilbereich angeben, welche den Mobil-Knoten zugeordnet sind.

16. Das Verfahren (80) nach Anspruch 15, wobei der zumindest verwendete Teil der IMSI-Nummern Mobile-Country-Codes umfasst.

17. Das Verfahren (80) nach Anspruch 15, wobei die Tätigkeit des Bildens der Roaming-Tabelle ferner umfasst, dass Zeiten identifiziert werden, zu welchen Werte dort eingegeben werden.

18. Das Verfahren nach Anspruch 17, welches ferner die Tätigkeit des Löschens von Werten aus der Roaming-Netzwerk-Tabelle nach einer gewählten Zeit umfasst.

## Revendications

1. Partie de réseau d'un système de radiocommunication (10) ayant une pluralité de noeuds mobiles (12) pouvant fonctionner pour communiquer avec la partie de réseau, la partie de réseau ayant une première portion de réseau (16) et au moins une seconde portion de réseau (18), la première portion de réseau (16) étant activée par un premier opérateur réseau et la au moins seconde portion de réseau (18) étant activée par au moins un second opérateur réseau, une portion sélectionnée parmi la première portion de réseau (16) et la au moins seconde portion de réseau (18) formant une portion de réseau domestique associée à un noeud mobile (12) des noeuds mobiles, ladite partie de réseau **caractérisée par** un dispositif (42) destiné à fournir à un utilisateur d'un noeud mobile de la pluralité de noeuds mobiles un listage des portions de réseau avec lesquelles le noeud mobile (12) peut communiquer lors de l'itinérance au-delà de la portion de réseau domestique associée à ce dernier, ledit dispositif (42) comprenant :
un détecteur (48) adapté pour recevoir des informations de positionnement associées à la pluralité de noeuds mobiles (12), les informations de positionnement communiquées par les noeuds mobiles (12) à la partie de réseau à des périodes sélectionnées lorsque les noeuds mobiles (12) communiquent avec la partie de réseau, ledit détecteur (48) pour détecter les valeurs des informations de positionnement et pour former des indications des valeurs des informations de positionnement, les informations de positionnement identifiant le positionnement des noeuds mobiles (12) en fonction de celle avec laquelle parmi la première et au moins la seconde portion de réseau les noeuds mobiles communiquent et, de ce fait, les relations de ces dernières avec les noeuds mobiles (12) ;
un associateur (52) couplé audit détecteur (48) pour recevoir les indications formées par ledit détecteur (48) des valeurs des informations de positionnement, ledit associateur (52) destiné à associer le positionnement des noeuds mobiles (12) avec une portion parmi la première et au moins la seconde portion de réseau (16, 18) respectivement, vers lesquelles les informations de positionnement sont communiquées, pour ainsi indiquer, si l'une des portions de réseau (16, 18) avec lesquelles les informations de positionnement indiquent les noeuds mobiles (12) à associer, est autre que les portions de réseau domestique ; et
un élément de stockage (44) couplé audit associateur, ledit élément de stockage (44) destiné à stocker les valeurs représentant des associations formées par ledit associateur (52), les valeurs formant ensemble un tableau de réseau d'itinérance (46) indiquant avec laquelle des portions de réseau, les noeuds mobiles (12) peuvent communiquer, le tableau de réseau d'itinérance formant le listage, le listage étant accessible par les utilisateurs de la pluralité de noeuds mobiles, à munir ainsi du listage des portions de réseau.

2. Partie de réseau selon la revendication 1, dans laquelle les noeuds mobiles (12) ont des identifiants associés à cet endroit et dans laquelle ledit détecteur (48) est en outre adapté pour recevoir les identifiants et pour détecter les valeurs de ces derniers.

3. Partie de réseau selon la revendication 2, dans laquelle le système de radiocommunication (10) comprend un système de radiocommunication cellulaire qui fournit un service général de radiocommunication par paquets (GPRS) et dans laquelle les identifiants associés aux noeuds mobiles (12) comprennent au moins une portion de numéros IMSI (identité internationale de l'abonné mobile).

4. Partie de réseau selon la revendication 3, dans laquelle le numéro IMSI comprend un code de réseau mobile (MNC) et dans laquelle la au moins une portion du numéro IMSI dont ledit détecteur détecte les valeurs comprend le code de réseau mobile, le code de réseau mobile identifiant les portions de réseau domestique associées aux noeuds mobiles.

5. Partie de réseau selon la revendication 3, dans laquelle les numéros IMSI comprennent les codes de pays mobiles (MCC) et dans laquelle la au moins une portion de numéros IMSI dont ledit détecteur détecte les valeurs comprend les codes de pays mobiles.

6. Partie de réseau selon la revendication 1, dans laquelle les noeuds mobiles (12) s'enregistrent avec la partie de réseau à des périodes sélectionnées et dans laquelle les informations de positionnement détectées par ledit détecteur sont communiquées par les noeuds mobiles suivant l'enregistrement avec la partie de réseau.

7. Partie de réseau selon la revendication 1, dans laquelle des communications des noeuds mobiles (12) sont formatées en messages, les messages ayant des parties d'en-tête et dans laquelle les informations de positionnement détectées par ledit détecteur sont réalisées dans les parties d'en-tête des messages.

8. Partie de réseau selon la revendication 2, dans laquelle ledit associateur identifie en outre les noeuds mobiles dont le positionnement est associé avec une portion parmi la première et au moins la seconde portion de réseau.

9. Partie de réseau selon la revendication 1, dans laquelle le tableau de réseau d'itinérance comprend en outre des indications de temps où les valeurs représentant les associations sont stockées au niveau dudit élément de stockage.

10. Partie de réseau selon la revendication 9 comprenant en outre un dispositif de suppression des entrées du tableau d'itinérance couplé audit élément de stockage, ledit dispositif de suppression des entrées du tableau d'itinérance pouvant fonctionner pour supprimer les valeurs sélectionnées du tableau des entrées d'itinérance au niveau dudit élément de stockage.

11. Partie de réseau selon la revendication 10, dans laquelle ledit dispositif de suppression des entrées du tableau d'itinérance supprime des valeurs du tableau des entrées d'itinérance stockées à cet endroit pour une période plus longue que la période de temps sélectionnée.

12. Procédé (80) de communication dans un système de radiocommunication ayant une pluralité de noeuds mobiles pouvant fonctionner pour communiquer avec une partie de réseau, la partie de réseau ayant une première portion de réseau et au moins une seconde portion de réseau, la première portion de réseau étant activée par un premier opérateur réseau et la au moins seconde portion de réseau étant activée par au moins un second opérateur réseau, une portion sélectionnée parmi la première portion de réseau et la au moins seconde portion de réseau formant une portion de réseau domestique associée à chaque noeud mobile de la pluralité de noeuds mobiles, comprenant l'étape consistant à fournir à un utilisateur d'un noeud mobile de la pluralité de noeuds mobiles un listage de portions de réseau avec lesquelles le noeud mobile peut communiquer lors de l'itinérance au-delà de la portion de réseau domestique associée à ce dernier, ledit procédé **caractérisé par** les étapes suivantes :
détecter (82) des valeurs d'informations de positionnement, les informations de positionnement associées à la pluralité de noeuds mobiles et communiquées par les noeuds mobiles à la partie de réseau à des périodes sélectionnées où les noeuds mobiles communiquent avec la partie de réseau, les informations de positionnement identifiant le positionnement des noeuds mobiles en fonction de celle avec laquelle parmi la première et au moins la seconde portion de réseau les noeuds mobiles communiquent et, de ce fait, les relations de ces dernières avec les noeuds mobiles ;
associer (84) le positionnement des noeuds mobiles avec une portion parmi la première et au moins la seconde portion de réseau, respectivement, vers lesquelles des informations de positionnement sont communiquées, pour indiquer ainsi, si l'une des portions de réseau avec lesquelles les informations de positionnement indiquent les noeuds mobiles à associer, est autre que la portion de réseau domestique ;
former (86) un tableau de réseau d'itinérance indiquant avec laquelle des portions de réseau les noeuds mobiles peuvent communiquer en réponse aux associations formées pendant ladite opération d'association ;
accéder, par les utilisateurs de la pluralité de noeuds mobiles à la table de réseau d'itinérance, le tableau de réseau d'itinérance formant le listage, pour fournir ainsi auxdits utilisateurs le listage des portions de réseau.

13. Procédé (80) selon la revendication 12, dans lequel ladite opération de détection comprend en outre des valeurs de détection qui identifient les noeuds mobiles.

14. Procédé (80) selon la revendication 13, dans lequel le système de radiocommunication comprend un système de radiocommunication cellulaire qui fournit un service général de radiocommunication par paquets (GPRS) et dans lequel les valeurs qui identifient les noeuds mobiles pendant ladite opération de détection comprennent au moins une portion de numéros IMSI (identité internationale de l'abonné mobile).

15. Procédé (80) selon la revendication 14, dans lequel la au moins une portion de numéros IMSI comprend des codes de réseau mobiles, les codes de réseau mobiles identifiant les portions de réseau domestique associées aux noeuds mobiles.

16. Procédé (80) selon la revendication 15, dans lequel la au moins une portion de numéros IMSI comprend des codes de pays mobiles.

17. Procédé (80) selon la revendication 15, dans lequel ladite opération de formation du tableau d'itinérance comprend en outre l'identification des périodes où les valeurs sont entrées à cet endroit.

18. Procédé (80) selon la revendication 17 comprenant en outre l'opération de suppression des valeurs hors du tableau de réseau d'itinérance après une période sélectionnée.
